# EUROPEAN PATENT APPLICATION

(11) **EP 1 380 602 A1**
(43) Date of publication of application: **14.01.2004**
(21) Application number: 02358014.5
(22) Date of filing: 11.07.2002
(51) Int. Cl.: C08F 10/00, C08F 2/34

(54) **Process for the (co-)polymerisation of olefins in the gas phase**

(71) Applicant: BP Lavéra SNC, 95866 Cergy Pontoise Cedex (FR)
(72) Inventor: The designation of the inventor has not yet been filed
(74) Representative: De Kezel, Eric

(57) **Abstract**

Process for the polymerisation or copolymerisation in the gas phase of olefin(s) by bringing the said olefin(s) into contact, under polymerization or copolymerisation conditions in a reactor in which the polymer or the copolymer is maintained in a fluidized bed and/or agitated with mechanical stirring, with a catalyst system, which process comprises a pre start-up operation characterized in that, prior to the introduction of the catalytic system in the reactor, the reactor is subjected to a cleaning treatment comprising the steps of introducing into the reactor an alkane having from 4 to 8 carbon atoms, circulating said alkane across the reactor under pressure and elevated temperature, depressurizing and purging the reactor.

## Description

The present invention relates to a process for improving the start up of polymerization or copolymerization of alpha-olefins in a gas phase reactor, preferably a fluidized bed gas phase reactor.

Polymerizing alpha-olefins in the gas phase by bringing them into contact with a catalyst system in an apparatus comprising, for example, a reactor with a fluidized bed and/or with mechanical stirring is known. In the special case of the use of a fluidized bed reactor, the solid polymer in course of formation is kept in the fluidized state by means of a rising reaction gas mixture, comprising the alpha-olefins to be polymerized. This gaseous mixture leaving the reactor is generally cooled before being recycled into the reactor and an additional quantity of alpha-olefins corresponding to the quantities consumed is added to it. The start up of the polymerization reaction in the gas phase is generally performed by introducing the catalyst system into a reactor fed with reaction gas mixture, and also containing a charge powder. This charge powder, consisting of solid particles, such as particles of polyolefin, is used to form the initial bed at the moment when the polymerization reaction starts up, favoring in particular a suitable dispersion of the catalyst system in the reaction medium. Polymerization may then be performed continuously, the catalyst system being introduced into the reactor continuously or in sequence. The polymer produced may be withdrawn from the reactor also continuously or in sequence.

In the industrial production of polyolefins, it may be necessary to stop the polymerization reaction temporarily in order to be able to carry out various operations for maintaining or cleaning the reactor. Impurities such as water and oxygen may be introduced during these various operations into the polymerization apparatus and/or into the charge powder introduced into the reactor when the reaction is restarted. Under these conditions and although the catalyst system used, of Ziegler-Natta type, is known for not having an induction period, the polymerization reaction commences several hours after the commencement of introduction of the catalyst system into the reactor. The actual start up of polymerization consequently takes place in the presence of a relatively high concentration of catalyst system in the fluidized bed, so that the polymerization reaction speed may increase rapidly and abruptly, with the risk of forming localized hot spots and the bursting of polymer grains into fine particles. These localized hot spots may lead to the formation of agglomerates and setting of the polymer inside the reactor, and are liable to cause the stoppage of the polymerization reaction. Moreover, in the special case of polymerization in a fluidized bed, the fine particles, formed by the bursting of the grains making up the bed, are inevitably entrained out of this bed, which gives rise to a continuation of the polymerizing reaction outside the reactor.

Moreover, the considerably increased concentration of catalyst system in the fluidized bed at the moment when the reaction starts up appreciably modifies the conditions of development of the polymerization or copolymerisation, so that the polymers or copolymers produced in the initial phase of the reaction have properties notably different from those of the desired products, especially as regards density, comonomer content, melt index, crystallinity and content of catalyst residues. It is then observed that it is necessary to produce a relatively high quantity of polyolefins before obtaining the product of desired quality.
The prior art teaches to use organoaluminium compounds to purify the reactor and/or bed particles in order to improve the start-up conditions. EP180420 is an example thereof.

It has now been found that it is possible to avoid the difficulties mentioned above as well as to bring additional advantages as disclosed hereafter and to obtain the start up of the polymerization or copolymerisation reaction immediately after the alpha-olefins have been brought into contact with the catalyst system and a charge powder, without the risk of formation of agglomerates or fine particles, the polyolefins produced during this period of start up having constant properties and having immediately the desired quality.

The object of the present invention is therefore a process for the polymerisation or copolymerisation in the gas phase of olefins by bringing the said olefins into contact, under polymerization or copolymerisation conditions in a reactor in which the polymer or the copolymer is maintained in a fluidized bed and/or agitated with mechanical stirring, with a catalyst system, which process comprises a pre start-up operation characterized in that, prior to the introduction of the catalytic system in the reactor, the reactor is subjected to a cleaning treatment comprising the steps of introducing into the reactor an alkane having from 4 to 8 carbon atoms, circulating said alkane across the reactor under pressure and elevated temperature, depressurizing and purging the reactor.

The Applicants have unexpectedly found that this alkane treatment lead to smooth and improved in all aspects polymerization start-ups, as showed in the examples. While not wishing to be bound to this explanation, the Applicants believe that it is the absorption capacity of the alkane which positively impacts on the polymer residues and impurities present on the reactor wall, in the piping and exchangers, so that during the depressurizing/purging steps a high desorption of these residues and impurities occur by mechanical and/or dissolution and/or azeotropic type mechanisms.

The essential feature of the present invention lies in said alkane cleaning treatment of the reactor. Many different ways to proceed with this treatment can be explored by the man in the art. Hereafter are depicted some of these treatments that can advantageously be applied.

Said pre start-up operation may be performed before, after or during the introduction of the charge powder into the reactor. As demonstrated in the examples, excellent results have been obtained when the cleaning treatment is performed before introduction of the charge powder into the reactor. The charge powder used for the start up of polymerisation or copolymerisation consists of solid particles of an inorganic product, such as silica, alumina, talc or magnesia, or else an organic product such as a polymer or copolymer. In particular the charge powder may be a polyolefin powder preferably of the same nature as that of the polyolefin powder to be produced, so that as soon as the reaction starts up, polyolefin of the desired quality is obtained immediately. Such a charge powder may in particular originate from a previous polymerisation or copolymerisation reaction. In this way one may use as charge powder a powder of a polyethylene, a polypropylene, a copolymer of ethylene with less than 20% by weight of one or more other alpha-olefins comprising, for example, from 3 to 12 carbon atoms, an elastomeric copolymer of ethylene with from 30 to 70% by weight of propylene, a copolymer of ethylene with less than 20% by weight of ethylene or one or more other alpha-olefins comprising from 4 to 12 carbon atoms, or a copolymer of propylene with from 10 to 40% by weight of 1-butene or a mixture of 1-butene and ethylene. Advantageously the charge powder consists of particles having a mean diameter by mass comprised between 200 and 5000 microns, and preferably comprised between 500 and 3000 microns. The size of the charge powder particles is chosen partly as a function of the size of the polyolefin particles to be produced, and partly as a function of the type of polymerisation reactor and conditions of use of this reactor, such as for example the speed of fluidisation which may for example be comprised between 2 to 10 times the minimum speed of fluidisation of the polyolefin particles to be produced.

The cleaning treatment consists in introducing into the reactor an alkane having from 4 to 8 carbon atoms, circulating said alkane across the reactor under pressure, depressurizing and purging the reactor.
The introduction of the alkane in a fluidised bed and/or with mechanical stirring, is preferably performed in the presence of an inert gas. In particular the treatment may be performed in the presence of nitrogen. It is also preferably performed under airtight conditions in order to avoid any oxygen ingress. It is also preferably performed in the absence of reacting gas like the olefins.

For the purpose of the present description and appended claims, "under pressure" treatment means that the pressure inside the reactor is at lease above the atmospheric pressure. The alkane cleaning treatment is preferably carried out under a pressure comprised between 5 and 30 bars. For the purpose of the present description and appended claims, a treatment at an "elevated temperature" means that the treatment is performed at a reactor temperature of at least 40°C, preferably performed at a temperature comprised between 50 and 120°C and more preferably at a temperature comprised between 70 and 110°C. Preferably, when a charge powder is present, the treatment temperature should be below the temperature at which the particles of charge powder begin to soften and form agglomerates.

The alkane is for example, butane, pentane, hexane, heptane or octane. Pentane is preferably used.

The quantity of alkane used according to the invention depends on the state of purity of both the reactor loop and the charge powder. Preferably, the quantity of alkane used for the treatment is such that the alkane partial pressure is comprised between 25 and 95% of the saturated vapor pressure of the said alkane under the treatment conditions (temperature and pressure). More preferably, the quantity of alkane used for the treatment is such that the alkane partial pressure is comprised between 45 and 75% of the saturated vapor pressure of the said alkane under the treatment conditions (temperature and pressure).

In order to provide the most efficient cleaning treatment, it is important that this treatment should last at least five minutes and preferably over 15 minutes. It has been observed, in fact, that when the duration of the treatment is less than 5 minutes, the polymerisation or copolymerisation reaction does not start up immediately when the alpha-olefins are brought into contact with the charge powder in the presence of the catalyst system.

As already indicated, the cleaning process includes after the alkane circulation under pressure a depressurizing step. Then, the consecutive purge operation(s) is/are performed according to techniques in themselves known, such as successive operations of pressurising and degassing the reactor by means of gases or a mixture of gases as referred to above. They may be carried out under a pressure at least equal to atmospheric pressure, preferably under a pressure comprised between 0.1 and 5 MPa, at a temperature equal to or greater than 0 DEG C., but less than the temperature at which the charge powder particles begin to soften and form agglomerates, and preferably at a temperature comprised between 40 DEG and 120 DEG C.

Any appropriate additional cleaning treatment may also be performed. For example, the reactor may additionally be treated with an organoaluminium compound of the formula AlRn X3-n in which R is an alkyl group comprising from 2 to 12 carbon atoms, X is a hydrogen or halogen atom, or an alcoholate group, and n is a whole number or fraction comprised between 1 and 3. Said organoaluminium additional treatment, if used, is preferably performed after the alkane treatment.

The organoaluminium compound, when used, may be chosen from amongst the trialkylaluminium compounds or hydrides, chlorides or alcoholates of alkylaluminium. Generally it is preferred to use a trialkylaluminium such as triethylaluminium, trisobutylaluminium, tri-n-hexyl-aluminium or tri-n-octyl aluminium. In certain cases, especially with a view to simplifing the process of the invention, the organoaluminium compound may advantageouly be of the same nature as that used as co-catalyst associated with the catalyst in the catalyst system.

Another additional treatment could be a dehydration treatment, which essentially consists in purge operations. If used, said additional dehydration treatment is advantageously performed before the alkane cleaning treatment of the present invention.

Contacting the olefins with the charge powder in the presence of the catalytic system may be performed in a manner in itself known, by means of a polymerisation or copolymerisation reactor with a fluidized bed and/or with mechanical stirring. This charge powder is introduced into the reactor which is also fed with a reaction gas mixture consisting of 1 or more (alpha)-olefins and optionally hydrogen and/or one or more inert gases, under the conditions of the polymerisation or copolymerisation reaction in the gas phase, that is to say under a pressure generally comprised between 0.1 and 5 MPa, preferably comprised between 0.5 and 4 MPa, and at a temperature generally comprised between 0 DEG and 125 DEG C., preferably comprised between 40 DEG and 120 DEG C.

Surprisingly, it has been observed that when one wishes to attain in an advantageous manner, in a relatively short time, a stable production of polyolefin of the desired quality, it is possible thanks to the process of the invention to perform the initial stage of the polymerisation or copolymerisation in the presence of the catalytic system in a relatively large quantities, without forming agglomerates or fine particles.

According to the process of the invention, it is possible to polymerize or copolymerize olefins which may comprise from 2 to 12 carbon atoms, in a fluidized bed and/or with mechanical stirring under very advantageous and very simple conditions, making it possible in particular as soon as the polymerisation or copolymerisation commences, to obtain polymers or copolymers of the desired quality under excellent conditions of yield and productivity of the industrial plant. For example, using the process of the invention it is possible to produce easily high density polyethylene (density above 0.940), which include homopolymers of ethylene and copolymers of ethylene and alpha-olefins comprising from 3 to 12 carbon atoms, linear low density polyethylene (density less than 0.940), consisting of a copolymer of ethylene and 1 or more alpha-olefins comprising from 3 to 12 carbon atoms, with a content by weight of units derived from ethylene of over 80%, elastomeric terpolymers of ethylene, propylene and dienes, elastomeric copolymers of ethylene and propylene, having a content by weight of units derived from ethylene comprised between about 30 and 70%, isotactic polypropylene and copolymers of propylene and ethylene or other alpha-olefins, having a content by weight of units derived from propylene of over 90%, copolymers of propylene, 1-butene and optionally ethylene having a content by weight of units derived from 1-butene and optionally ethylene comprised between 10 and 40% .

## Claims

1. Process for the polymerisation or copolymerisation in the gas phase of olefin(s) by bringing the said olefin(s) into contact, under polymerization or copolymerisation conditions in a reactor in which the polymer or the copolymer is maintained in a fluidized bed and/or agitated with mechanical stirring, with a catalyst system, which process comprises a pre start-up operation **characterized in that**, prior to the introduction of the catalytic system in the reactor, the reactor is subjected to a cleaning treatment comprising the steps of
introducing into the reactor an alkane having from 4 to 8 carbon atoms, circulating said alkane across the reactor under pressure and elevated temperature, depressurizing and purging the reactor.

2. Process according to claim 1 wherein the reactor contains a charge powder and wherein said cleaning treatment is performed before, after or during the introduction of the charge powder into the reactor.

3. Process according to claim 2 wherein said cleaning treatment is performed before introduction of the charge powder into the reactor.

4. Process according to any of the preceding claims wherein the introduction of the alkane is performed in the presence of an inert gas, e.g. nitrogen.

5. Process according to any of the preceding claims wherein the cleaning treatment is performed under airtight conditions, in the absence of reacting gas like the olefins.

6. Process according to any of the preceding claims wherein the cleaning treatment comprises circulating the alkane across the reactor under a pressure above the atmospheric pressure, preferably comprised between 5 and 30 bars.

7. Process according to any of the preceding claims wherein the cleaning treatment comprises circulating the alkane across the reactor at a temperature of at least 40°C, preferably at a temperature comprised between 50 and 120°C.

8. Process according to any of the preceding claims wherein the alkane is chosen amongst one or more of butane, pentane, hexane, heptane or octane.

9. Process according to claim 8 wherein pentane is used as the alkane.

10. Process according to any of the preceding claims wherein the quantity of alkane used for the treatment is such that the alkane partial pressure is comprised between 25 and 95% of the saturated vapor pressure of the said alkane under the temperature and pressure treatment conditions.

11. Process according to claim 10 wherein the quantity of alkane used for the treatment is such that the alkane partial pressure is comprised between 45 and 75% of the saturated vapor pressure of the said alkane under the treatment conditions.

12. Process according to any of the preceding claims wherein the treatment last at least five minutes and preferably over 15 minutes.
